# EUROPÄISCHE PATENTANMELDUNG

(11) **EP 0 523 685 A1**
(43) Veröffentlichungstag der Anmeldung: **20.01.1993**
(21) Anmeldenummer: 92112129.9
(22) Anmeldetag: 16.07.1992
(51) Int. Cl.: F26B 23/00, F26B 25/00

(54) **Verfahren zur Rückgewinnung von Wärme aus schwankende Abwärmemengen enthaltenden Strömungsmittel**

(30) Priorität: 16.07.1991 DE 4123530
(71) Anmelder: FRITZ EGGER GESELLSCHAFT m.b.H., A-6380 St. Johann i.T. (AT)
(72) Erfinder: Böhler, Harald, A-6800 Feldkirch (AT)
(74) Vertreter: Sandmann, Joachim, Dr.

(57) **Zusammenfassung**

Bei der Rückgewinnung von Wärme aus Abluft wird diese unter Kondensation von in ihr enthaltenem Wasserdampf in einem Wärmetauscher abgekühlt, der ebenfalls von einem zirkulierenden Wärmeträger durchströmt wird, der die Wärme aus der Abluft aufnimmt. Der durch den Wärmeträger erfolgende Wärmeentzug wird Schwankungen des Wärmeangebots der Abluft angepaßt. Die Anpassung erfolgt durch eine Veränderung des Wärmeträgerdurchsatzes, wobei ein das Wärmeangebot der Abluft beinhaltender Temperaturwert der Abluft vor dem Wärmetauscher mit der Temperatur des Wärmeträgers nach dem Wärmetauscher verglichen und die Temperaturdifferenz auf einen vorgegebenen Sollwert geregelt wird.

## Beschreibung

Die Erfindung bezieht sich auf ein Verfahren zur Rückgewinnung von Wärme aus schwankende Abwärmemengen enthaltenden Strömungsmitteln, insbesondere aus mit Wasserdampf beladener Abluft aus Trocknungsanlagen, bei dem der Strömungsmittelstrom im Wärmeaustausch mit einem Wärmeträger gebracht wird, der dem Strömungsmittel die rückgewonnene Wärme entzieht.

Ein solches Verfahren ist bekannt (EP-A 385 372). Dort wird die Wärme aus der Abluft einer Holzspantrocknungsanlage rückgewonnen, wobei die vom Trockner kommende Abluft in einem Gegenstromwäscher gewaschen wird und die vom Wäschersumpf zu den Sprühdüsen des Wäschers zurückgepumpte Waschflüssigkeit den zirkulierenden Wärmeträger bildet, welcher der Abluft im Gegenstromwäscher Wärme entzieht und diese in einem (weiteren) Wärmetauscher an ein Heizmedium abgibt, das durch den Heizmantel eines Vortrockners umgewälzt wird, so daß die rückgewonnene Wärme zum Vortrocknen der Holzspäne genutzt wird. Alternativ oder zusätzlich wird die rückgewonnene Wärme genutzt, um Frischluft zu erwärmen, die der zum Kamin strömenden Abluft zur Erhöhung ihres Auftriebs beigemischt wird oder dem Brenner zugeführt wird, der die in den Haupttrockner eingeleiteten heißen Verbrennungsgase liefert.

Beim bekannten Verfahren werden sowohl die Waschflüssigkeit wie auch das Heizmedium mit gleichbleibendem Durchsatz jeweils mittels einer Pumpe umgewälzt. Entsprechendes gilt für den Luftdurchsatz mittels eines Ventilators im Falle der Nutzung der Abwärme zur Lufterhitzung. Diese gleichbleibenden Durchsätze wurden als nachteilig erkannt, weil das Wärmeangebot bzw. die nutzbare Wärmeenergie der Abluft zum Teil erheblichen Schwankungen unterworfen ist. Diese Schwankungen ergeben sich beispielsweise aus Unterschieden der anfallenden Abluftmengen, der Ablufttemperaturen und/oder des Feuchtegehalts der Abluft, hervorgerufen beispielsweise durch Schwankungen der zu trocknenden Spanmenge, dem Feuchtigkeitsgehalt der zu trocknenden Späne, der Abdampfleistung und dergleichen Faktoren. Das schwankende Wärmeangebot der Abluft wirkt sich auf den Wärmeträger aus, der beispielsweise bei einem sinkenden Wärmeangebot im Wärmeaustausch nur noch auf eine niedrigere Temperatur erwärmt wird. Ein derartiges Absinken des Temperaturniveaus kann die Möglichkeit und/oder Wirtschaftlichkeit der Wärmerückgewinnung entscheidend beeinflussen.

Zur Verdeutlichung wird auf die Verhältnisse bei einer Holzspantrocknungsanlage Bezug genommen. Dort weist der Abluftstrom, je nach Trocknertype und Betriebsweise, üblicherweise eine Austrittstemperatur im Bereich von ca. 100^{o}C bis 160^{o}C auf. Die Wasserdampfbeladung liegt, ebenfalls abhängig von Trocknertype und Betriebsweise, im Bereich von ca. 150 g/kg Luft bis 350 g/kg Luft. Daraus ergeben sich Sättigungstemperaturen im Bereich von ca. 61^{o}C bis ca. 64^{o}C. Unter Sättigungstemperatur wird dabei die Temperatur verstanden, die sich einstellt, wenn der Abluftstrom mit im Kreislauf geführtem Wasser bedüst, dabei abgekühlt und voll mit Wasserdampf gesättigt wird, ohne daß ein Wärmeaustrag aus diesem Kreislauf erfolgt. Wird der Abluftstrom in einem Wärmetauscher abgekühlt, so ergibt sich seine Taupunkttemperatur, die geringfügig unter der Sättigungstemperatur liegt. Als Taupunkttemperatur wird dabei die Temperatur verstanden, bis zu der die Abluft abgekühlt werden muß, damit sie voll gesättigt ist, ohne daß jedoch bereits Wasserdampfkondensation einsetzt. Die Taupunkttemperatur und die Sättigungstemperatur werden dabei von der Zusammensetzung des Abluftstromes und dem Luftdruck geringfügig beeinflußt. Sie können sowohl gemessen als auch nach bewährten Methoden berechnet werden.

Zur Rückgewinnung und Nutzung der Wärme aus der Abluft wird diese zweckmäßigerweise bis unter die Taupunkttemperatur abgekühlt. Die beim Kondensationsvorgang freiwerdende Kondensationswärme bildet den Hauptanteil des Wärmepotentials der Abluft. Diese Abwärme fällt jedoch in einem Temperaturbereich an, der für eine wirkungsvolle Abwärmenutzung häufig sehr niedrig liegt, und es ist in vielen Fällen wünschenswert, diese Abwärme auf einem möglichst hohen Temperaturniveau zu halten, unabhängig von einem schwankenden Wärmeangebot der Abluft.

Dementsprechend liegt der Erfindung die Aufgabe zugrunde, die Wärmerückgewinnung so durchzuführen, daß unabhängig von Schwankungen des Wärmeangebots jeweils ein möglichst hohes Temperaturniveau der zurückgewonnenen Wärme eingehalten wird.

Diese Aufgabe wird erfindungsgemäß dadurch gelöst, daß der Wärmeentzug durch den Wärmeträger den Schwankungen des Wärmeangebots des Strömungsmittels angepaßt wird.

Zweckmäßige Ausgestaltungen und Weiterbildungen dieses erfindungsgemäßen Verfahrens ergeben sich aus den Unteransprüchen.

Danach kann die erfindungsgemäße Anpassung des Wärmeentzugs an das Wärmeangebot von Abluft so durchgeführt werden, daß die Sättigung- bzw. Taupunkttemperatur der Abluft vor dem Wärmeaustausch direkt gemessen oder aus Abluftdaten errechnet und mit der Temperatur des erwärmten Wärmeträgers nach dem Wärmeaustausch verglichen wird, um den Wärmeträgerdurchsatz so zu regeln, daß die genannte Temperaturdifferenz einen optimalen Wert annimmt. Es ist ersichtlich, daß durch eine Drosselung des Wärmeträgerdurchsatzes bei sinkendem Wärmeangebot verhindert werden kann, daß das Temperaturniveau des im Wärmeaustausch aufgeheizten Wärmeträgers entsprechend absinkt. Dabei kann die Regelung von Hand, teilautomatisch oder - wie bei großen Anlagen zweckmäßig - vollautomatisch erfolgen. Beispielsweise wird mit einer fest eingestellten Temperaturdifferenz als Regelkriterium bzw. Regelgröße gearbeitet, allenfalls kann auch diese Temperaturdifferenz in Abhängigkeit vom Wärmeangebot nachgeführt werden. Dabei sollte die Temperaturdifferenz im Hinblick auf das erstrebte hohe Temperaturniveau der Abwärme gering sein, sie muß jedoch ausreichen, um angesichts der apparativen Gegebenheiten einen im Interesse der Wirtschaftlichkeit der Wärmerückgewinnung liegenden ausreichenden Wärmeübergang von der Abluft an den Wärmeträger zu erzielen.

Wie bereits gesagt ist das trotz Schwankungen des Wärmeangebots der Abluft erfindungsgemäß erzielte im wesentlichen gleichbleibend hohe Temperaturniveau in manchen Anwendungsfällen eine Voraussetzung für eine sinnvolle Abwärmenutzung. Auch in diesem Zusammenhang sei zur Erläuterung auf das Beispiel der Nutzung der Abwärme für den Betrieb eines Vortrockners in einer Anlage zur Holzspantrocknung hingewiesen. Je höher die durch den Vortrockner geleitete Luft vorgewärmt ist, um so geringer ist der effektive Energieaufwand für die Vortrocknung. Beispielsweise ergeben Berechnungen, daß der für die Wasserverdampfung erforderliche Energieaufwand um ca. 13% sinkt, wenn die Temperatur der durch den Vortrockner geleiteten Luft von 50^{o}C auf 65^{o}C gesteigert werden kann, was eine zumindest phasenweise realistische Annahme für die Holzspantrocknung ist.

Im übrigen ist es im vorgenannten Beispiel der Abwärmenutzung für die Vortrocknung von Holzspänen mittels erwärmter Luft sinnvoll, bei sinkendem Wärmeangebot der Abluft nicht nur den Durchsatz bzw. die Umlaufmenge des Wärmeträgers zu reduzieren und bereits dadurch in erheblichem Maße Pumpenenergie einzusparen, beispielsweise durch Einsatz eines Frequenzumrichters zur Steuerung der Pumpenleistung, vielmehr wird dann zweckmäßigerweise ebenso entsprechend dem nunmehr geringeren Wärmeangebot des Wärmeträgers auch die Leistung des Ventilators für die erwärmte Vortrocknungsluft reduziert. Dann wird in Betriebsphasen mit vermindertem Wärmeangebot der Abluft mit im Durchsatzvolumen verminderter Vortrocknungsluft, im übrigen jedoch mit annäherd gleichbleibender Temperatur der Vortrocknungsluft gearbeitet. Auch hier können erhebliche Einsparungen an der Antriebsenergie für den Ventilator erzielt werden.

Drei Ausführungsbeispiele der Erfindung werden nachfolgend anhand einer schematischen Zeichnung näher erläutert. Es zeigen:
- Figur 1: den Wärmeaustausch zwischen Abluft und Wärmeträger in einem getrennte Strömungswege aufweisenden Wärmetauscher, wobei Einrichtungen zur erfindungsgemäßen Regelung dargestellt sind;
- Figur 2: eine Anlage mit einem Gegenstromwäscher für die Abluft mit einem Wärmeträgerkreis und mit einem nur teilweise dargestellten Heizmediumkreis, wobei Einrichtungen zur erfindungsgemäßen Regelung dargestellt sind; und
- Figur 3: eine gegenüber Figur 2 erweiterte Anlage mit einem vollständig dargestellten Heizmediumkreis,der zur Erwärmung nicht zirkulierender Luft dient.

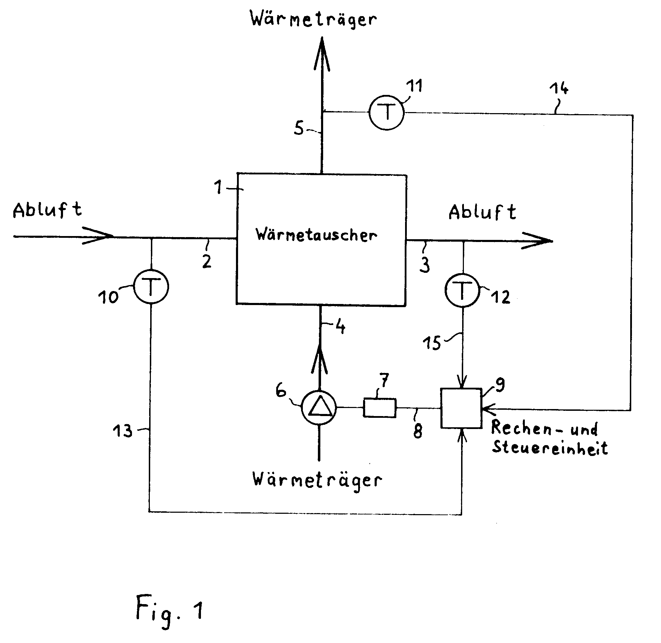

Gemäß Figur 1 ist ein Wärmetauscher 1 mit einem Kühlpfad für die von der Ablufteintrittsleitung 2 zur Abluftaustrittsleitung 3 strömende Abluft vorgesehen. Durch den Heizpfad des Wärmetauschers 1 strömt ein Wärmeträger von der Wärmeträgereintrittsleitung 4 zur Wärmeträgeraustrittsleitung 5.

In die Wärmeträgereintrittsleitung 4 ist eine Pumpe 6 eingebaut, die über ein Stellglied 7 zur Veränderung des Wärmeträgerdurchsatzes steuerbar ist. Gegebenenfalls könnte der Wärmeträgerdurchsatz auch mittels einer in die Wärmeträgereintrittsleitung 4 eingebauten verstellbaren Drosselklappe verändert werden. Das Stellglied 7 wird seinerseits über eine Steuerleitung 8 durch eine Rechen- und Steuereinheit 9 betätigt. Diese erhält und verarbeitet Signale, die von einem der Ablufteintrittsleitung 2 zugeordneten Temperaturfühler 10, einem der Wärmeträgeraustrittsleitung 5 zugeordneten Temperaturfühler 11 und einem der Abluftaustrittsleitung 3 zugeordneten Temperaturfühler 12 stammen und über Signalleitungen 13 bzw. 14 bzw. 15 übertragen werden.

Die Rechen- und Steuereinheit 9 vergleicht die Differenz der von den Temperaturfühlern 10 und 11 gelieferten, ggf. anhand zusätzlicher Daten korrigierten Temperaturen mit einem vorgegebenen Sollwert. Sofern diese Temperaturdifferenz von dem Sollwert abweicht, wird über ein Steuersignal auf die Pumpe 6 eingewirkt und der Wärmeträgerdurchsatz so eingeregelt, daß der Sollwert eingehalten wird. Dieses bedeutet, daß bei einem Ansteigen der vorgenannten Temperaturdifferenz der Wärmeträgerdurchsatz reduziert wird, der Wärmeträger also im Wärmetauscher 1 auf eine höhere Temperatur gebracht wird, während umgekehrt bei einem Absinken der vorgenannten Temperaturdifferenz der Wärmeträgerdurchsatz entsprechend erhöht wird. Auf diese Weise wird sichergestellt, daß die aus der Abluft zurückgewonnene Wärme entsprechend der nach dem Wärmetauscher 1 herrschenden Temperatur des Wärmeträgers auf einem hohen Temperaturniveau gehalten wird, ohne daß dabei auf eine umfassende Wärmerückgewinnung verzichtet wird, was dann der Fall wäre, wenn mit einem (zu) geringen Wärmeträgerdurchsatz die Abluft im Wärmetauscher nur noch ungenügend abgekühlt wird. Dieser unerwünschte Zustand würde sich mit Hilfe des Temperaturfühlers 12 in der Rechen- und Steuereinheit 9 feststellen lassen und wird durch die als Regelgröße dienende vorgenannte Temperaturdifferenz ausgeschlossen.

Mit dem vom Temperaturfühler 12 gelieferten Signal soll im konkreten Fall die beschriebene Regelung derart begrenzt werden, daß eine bestimmte Mindesttemperatur der Abluft nach dem Wärmetauscher 1 nicht unterschritten wird. Die Einhaltung einer Mindesttemperatur der abströmenden Abluft kann wichtig sein während Anfahrphasen oder bei Kleinlastbetrieb, um beispielsweise die Funktion nachfolgender Anlagen sicherzustellen oder um ausreichende Auftriebskräfte in der über einen Kamin in die Umgebung abgegebenen Abluft zu haben.

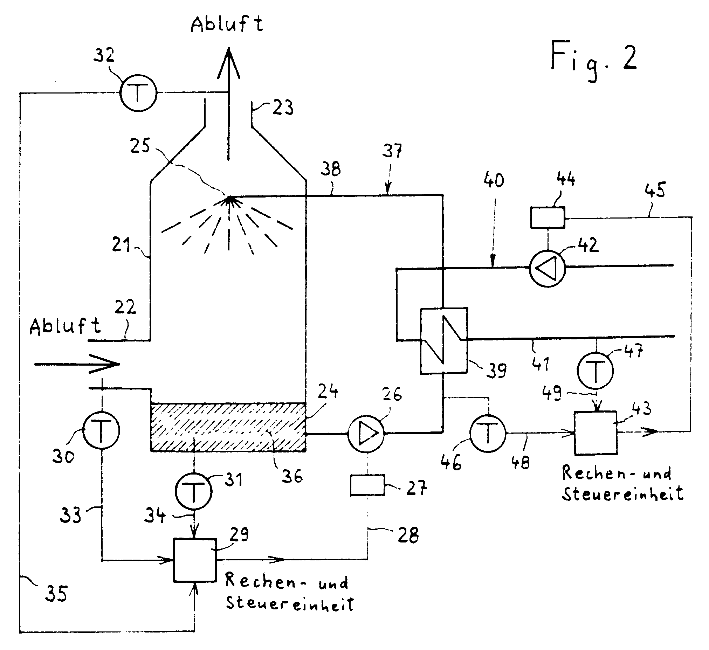

Bei der Anlage nach Figur 2 ist die anhand von Figur 1 beschriebene Anordnung und Wirkungsweise ebenso vorhanden. Hier ist der Wärmetauscher 1 durch einen Gegenstromwäscher 21 mit einer Ablufteintrittsleitung 22 und einer Abluftaustrittsleitung 23 ersetzt. Der Wärmeträger wird von der Waschflüssigkeit gebildet, die vom Sumpf 24 zu den Sprühdüsen 25 des Gegenstromwäschers 21 mittels einer Pumpe 26 umgewälzt wird. Der Pumpe 26 ist ein Frequenzumrichter 27 zugeordnet, der über eine Steuerleitung 28 mit einer Rechen- und Steuereinheit 29 verbunden ist. Wiederum sind drei Temperaturfühler 30, 31 und 32 vorgesehen, die der Ablufteintrittsleitung 22 bzw. dem Sumpf 24 (Waschflüssigkeitstemperatur nach dem Wärmeaustausch im direkten Kontakt mit der Abluft) bzw. der Abluft nach dem Gegenstromwäscher 21 zugeordnet sind. Die Temperaturfühler 30, 31 und 32 sind über Signalleitungen 33 bzw. 34 bzw. 35 mit der Rechen- und Steuereinheit 29 verbunden, die wiederum über den Frequenzumrichter 27 und die Pumpe 26 den Durchsatz der sich im Sumpf 24 ansammelnden Waschflüssigkeit 36 steuert.

Ein solcher Gegenstromwäscher 21, der gleichzeitig der Wärmerückgewinnung und der Reinigung der Abluft dient, hat sich bei Holzspantrocknungsanlagen bewährt. Zur Entlastung der Zeichnung sind die Abzugsleitung für überschüssige Waschflüssigkeit 36, die sich auf Grund des ständig anfallenden Kondensats aus der Abluft ergibt, sowie allenfalls benötigte Einrichtungen zum Zudosieren frischer Waschflüssigkeit und/oder von Chemikalien für den gezielten Austrag von Holzinhaltsstoffen aus der Waschflüssigkeit nicht dargestellt.

In den Wärmeträgerkreis 37 mit der Waschflüssigkeitsleitung 38 ist ein (weiterer) Wärmeaustauscher 39 eingebaut, dessen Kühlpfad von der Waschflüssigkeit 36 durchströmt wird. Der Heizpfad des Wärmeaustauschers 39 liegt in einem Heizmediumkreis 40, der eine Heizleitung 41 mit einer Umwälzpumpe 42 aufweist.

So wie die Pumpe 26 von der Rechen- und Steuereinheit 29 gesteuert wird, um den Durchsatz an Waschflüssigkeit dem Wärmeangebot der Abluft anzupassen, wird die Umwälzpumpe 42 von einer zweiten Rechen- und Steuereinheit 43 gesteuert, um den Durchsatz an Heizmedium dem Wärmeangebot der zirkulierenden Waschflüssigkeit 36 anzupassen. Dazu ist der Umwälzpumpe 42 ein Frequenzumrichter 44 zugeordnet, der über eine Steuerleitung 45 an die Rechen- und Steuereinheit 43 angeschlossen ist. Auch hier wird anhand eines Sollwerts für die Differenz der Temperatur der umgewälzten Waschflüssigkeit 36 vor dem Wärmeaustauscher 39 und der Temperatur des Heizmediums hinter dem Wärmeaustauscher 39 geregelt. Dementsprechend sind an die Waschflüssigkeitsleitung 38 ein Temperaturfühler 46 und an die Heizleitung 41 ein Temperaturfühler 47 angeschlossen, die über eine Signalleitung 48 bzw. 49 mit der Rechen- und Steuereinheit 43 verbunden sind.

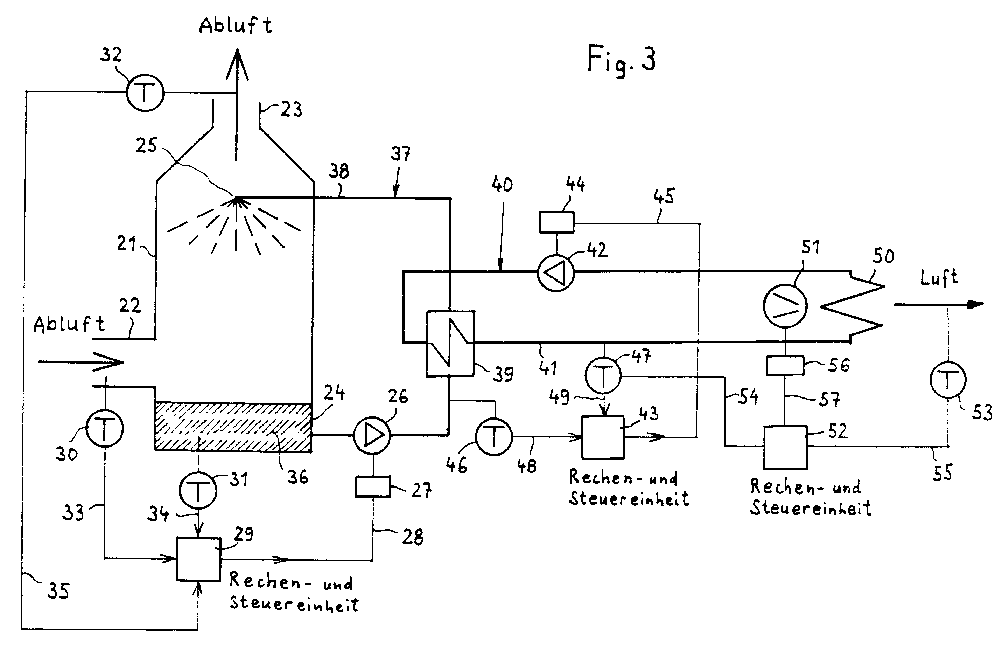

Bei der in Figur 3 dargestellten Anlage handelt es sich um die gleiche Anlage wie anhand von Figur 2 beschrieben, wobei lediglich einige zusätzliche Aggregate vorgesehen sind, wie es Figur 3 rechts zeigt. Dementsprechend sind die bereits für Figur 2 verwendeten Bezugszeichen auch in Figur 3 eingetragen und wird die Anlage insoweit hier nicht nochmals beschrieben. Während nach Figur 2 die Nutzung der rückgewonnenen Wärme beispielsweise dadurch erfolgt, daß das durch den Heizmediumkreis 40 zirkulierende Heizmedium durch den Heizmantel eines Vortrockners für Holzspäne strömt, ist nach Figur 3 vorgesehen, daß mit dem zirkulierenden Heizmedium Luft erwärmt wird.

Dazu ist in den Heizmediumkreis 40 der Kühlpfad eines Verbrauchswärmetauschers 50 eingeschaltet, durch dessen Heizpfad mittels eines Ventilators 51 Luft geleitet wird. Der Verbrauchswärmetauscher 50 ist also in diesem Falle ein Lufterhitzer.

Auch hier wird der Luftdurchsatz in Anpassung an das Wärmeangebot seitens des Heizmediums geregelt. Dazu ist eine dritte Rechen- und Steuereinheit 52 vorgesehen, an die der Temperaturfühler 47, der die Temperatur des Heizmediums vor dem Verbrauchswärmeaustauscher 50 mißt, und ein weiterer Temperaturfühler 53, der die Temperatur der Luft hinter dem Verbrauchswärmetauscher 50 mißt, über eine Signalleitung 54 bzw. 55 angeschlossen sind. Ein dem Ventilator 51 zugeordneter Frequenzumrichter 56 ist über eine Steuerleitung 57 mit der Rechen- und Steuereinheit 52 verbunden.

Auch hier stellt die Rechen- und Steuereinheit 52 die Differenz der Temperaturen des zuströmenden Heizmediums und der abströmenden Luft fest und regelt diese Temperaturdifferenz auf einen vorgegebenen Sollwert ein, indem die Leistung des Ventilators 51 und damit der Luftdurchsatz verändert wird.

Vorstehend wurde die Erfindung im wesentlichen im Rahmen der Wärmerückgewinnung aus Abluft (einer Holzspantrockungsanlage) beschrieben und erläutert. Wie leicht zu ersehen läßt sich das Verfahren aber in entsprechender Weise auch auf die Abwärmenutzung aus Abwasserströmen oder aus sonstigen Wärmequellen (gasförmige wie flüssige Strömungsmittel) mit schwankendem Wärmeangebot übertragen.

## Patentansprüche

1. Verfahren zur Rückgewinnung von Wärme aus schwankende Abwärmemengen enthaltenden Strömungsmitteln, insbesondere aus mit Wasserdampf beladener Abluft aus Trocknungsanlagen, bei dem der Strömungsmittelstrom im Wärmeaustausch mit einem Wärmeträger gebracht wird, der dem Strömungsmittelstrom die rückgewonnene Wärme entzieht, **dadurch gekennzeichnet,** daß der Wärmeentzug durch den Wärmeträger den Schwankungen des Wärmeangebots des Strömungsmittels angepaßt wird.

2. Verfahren nach Anspruch 1, **dadurch gekennzeichnet,** daß der Wärmeentzug durch Änderung des Wärmeträgerdurchsatzes angepaßt wird.

3. Verfahren nach Anspruch 1 oder 2, **dadurch gekennzeichnet,** daß bei der Rückgewinnung von Wärme aus Abluft die Differenz der Taupunkttemperatur der Abluft vor dem Wärmeaustausch und der Temperatur des Wärmeträgers nach dem Wärmeaustausch als Regelgröße für den Wärmeentzug eingesetzt wird, wobei ein Anstieg der Temperaturdifferenz zu einem herabgesetzten Wärmeentzug bzw. einem verringerten Wärmeträgerdurchsatz führt.

4. Verfahren nach Anspruch 1 oder 2, **dadurch gekennzeichnet,** daß bei der Rückgewinnung von Wärme aus Abluft die Differenz der Sättigungstemperatur der Abluft vor dem Wärmeaustausch und der Temperatur des Wärmeträgers nach dem Wärmeaustausch als Regelgröße für den Wärmeentzug eingesetzt wird, wobei ein Anstieg der Temperaturdifferenz zu einem herabgesetzten Wärmeentzug bzw. verringerten Wärmeträgerdurchsatz führt.

5. Verfahren nach einem der Ansprüche 1 bis 4, **dadurch gekennzeichnet,** daß der Wärmeentzug so geregelt wird, daß eine Mindesttemperatur des Strömungsmittels nach dem Wärmeaustausch eingehalten wird.

6. Verfahren nach einem der Ansprüche 1 bis 5, bei dem Wärme aus Abluft zurückgewonnen wird und der Wärmeaustausch in einem Wäscher, insbesondere Gegenstromwäscher, für die Abluft erfolgt und die Waschflüssigkeit den zirkulierenden Wärmeträger bildet, der über einen weiteren Wärmeaustausch ein zirkulierendes Heizmedium erwärmt, **dadurch gekennzeichnet,** daß auch der beim weiteren Wärmeaustausch erfolgende Wärmeentzug durch das Heizmedium Schwankungen des Wärmeangebots des zirkulierenden Wärmeträgers angepaßt wird.

7. Verfahren nach Anspruch 6, **dadurch gekennzeichnet,** daß die Differenz der Temperatur des Wärmeträgers vor dem weiteren Wärmeaustausch und der Temperatur des Heizmediums nach dem weiteren Wärmeaustausch als Regelgröße für den Durchsatz an Heizmedium eingesetzt wird, wobei ein Anstieg der Temperaturdifferenz zu einem verringerten Heizmediumdurchsatz führt.

8. Verfahren nach einem der Ansprüche 1 bis 7, bei dem die rückgewonnene Wärme zur Erwärmung eines nicht zirkulierten Strömungsmittels wie Luft oder Wasser in einem Verbrauchswärmeaustausch genutzt wird, **dadurch gekennzeichnet,** daß auch der im Verbrauchswärmeaustausch erfolgende Wärmeentzug durch das Strömungsmittel Schwankungen des Wärmeangebots des zirkulierenden Wärmeträgers bzw. Heizmediums angepaßt wird.

9. Verfahren nach Anspruch 8, **dadurch gekennzeichnet,** daß die Differenz der Temperatur des Wärmeträgers bzw. Heizmediums vor dem Verbrauchswärmeaustausch und der Temperatur des Strömungsmittels nach dem Verbrauchswärmeaustausch als Regelgröße für den Durchsatz an Strömungsmittel eingesetzt wird, wobei ein Anstieg der Temperaturdifferenz zu einem verringerten Strömungsmitteldurchsatz führt.

10. Verfahren nach einem der Ansprüche 1 bis 9, **dadurch gekennzeichnet,** daß Durchsatzänderungen des Wärmeträgers bzw. Heizmediums bzw. Strömungsmittels durch eine Änderung der dem betreffenden Förderorgan zugeführten Antriebsleistung bewirkt werden.
